# EUROPEAN PATENT APPLICATION

(11) **EP 2 535 799 A2**
(43) Date of publication of application: **19.12.2012**
(21) Application number: 12171581.7
(22) Date of filing: 12.06.2012
(51) Int. Cl.: G06F 3/048

(54) **Apparatus and method for scrolling in device with touch screen**

(30) Priority: 13.06.2011 KR 20110056794
(71) Applicant: Samsung Electronics Co., Ltd., Suwon-si, Gyeonggi-do, 443-742 (KR)
(72) Inventor: Kwon, Woo-Up, Seoul (KR)
(74) Representative: Hylarides, Paul Jacques

(57) **Abstract**

An apparatus and method for scrolling in a device with a touch screen. The method includes, when a touch input through the touch screen is confirmed, scrolling a screen image of the touch screen in the direction of the touch input according to the touch input. The method also includes, when the touch input is held, continuously scrolling the screen image of the touch screen in the direction of the touch input.

## Description

### TECHNICAL FIELD OF THE INVENTION

The present disclosure relates to a device with a touch screen. More particularly, the present disclosure relates to an apparatus and method for providing an automatic scroll functioning in a device with a touch screen.

### BACKGROUND OF THE INVENTION

Portable terminals having become a necessity of modern people because of the ease of carriage and the inclusion of a variety of functions such as voice and video call functions, information input/output functions, and data storage. As the functions of the portable terminal are diversified as above, information to display on a display unit of the portable terminal is gradually increasing. However, because a size of the display unit is restrictive for the sake of the ease of carriage of the portable terminal, there is an inconvenience of having to shift the screen one by one so as to confirm information not displayed on the screen.

The portable terminal provides a user interface using a touch screen so that a user can conveniently make use of various functions.

A portable terminal with a touch screen as above scrolls a screen (i.e., scrolls a screen image or display) to correspond to a user's touch input (e.g., drag, flick, sweep) occurring on the touch screen.

However, even the portable terminal with the touch screen has an inconvenience of having to repeatedly receive a touch input for scrolling a screen for a user to confirm information not displayed on the touch screen.

### SUMMARY OF THE INVENTION

An aspect of the present disclosure is to substantially solve at least the above problems and/or disadvantages and to provide at least the advantages below. Accordingly, one aspect of the present disclosure is to provide an apparatus and method for providing an automatic scroll function in a device with a touch screen.

Another aspect of the present disclosure is to provide an apparatus and method for providing an automatic scroll function in consideration of holding information of a touch input for scroll in a device with a touch screen.

A further aspect of the present disclosure is to provide an apparatus and method for controlling an automatic scroll speed in a device with a touch screen.

Yet another aspect of the present disclosure is to provide an apparatus and method for controlling an automatic scroll speed according to a holding time of a touch input for scroll in a device with a touch screen.

The above aspects are achieved by providing an apparatus and method for scrolling in a device with a touch screen.

According to one aspect of the present disclosure, a method for scrolling a screen in a device with a touch screen is provided. The method includes, when a touch input through the touch screen is confirmed, scrolling a screen image of the touch screen in the direction of the touch input according to the touch input. The method also includes, when the touch input is held, continuously scrolling the screen image of the touch screen in the direction of the touch input.

According to another aspect of the present disclosure, an apparatus for scrolling a screen in a device with a touch screen is provided. The apparatus includes a touch screen and a controller. The controller is configured to scroll a screen image of the touch screen in the direction of a touch input through the touch input of the touch screen and, when the touch input is held, continuously scroll the screen image of the touch screen in the direction of the touch input.

Other aspects, advantages, and salient features of the disclosure will become apparent to those skilled in the art from the following detailed description, which, taken in conjunction with the annexed drawings, discloses exemplary embodiments of the disclosure.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating a construction of a device with a touch screen according to the present disclosure;
FIG. 2 is a flowchart illustrating a procedure of providing an automatic scroll function in a device with a touch screen according to an embodiment of the present disclosure;
FIG. 3 is a flowchart illustrating a procedure of providing an automatic scroll function in a device with a touch screen according to another embodiment of the present disclosure;
FIG. 4 is a flowchart illustrating a procedure of providing an automatic scroll function in a device with a touch screen according to a further embodiment of the present disclosure;
FIG. 5 is a flowchart illustrating a procedure of providing an automatic scroll function in a device with a touch screen according to a yet another embodiment of the present disclosure; and
FIG. 6 is a diagram illustrating a screen configured for providing an automatic scroll function in a device with a touch screen according to an embodiment of the present disclosure.

### DETAILED DESCRIPTION OF THE INVENTION

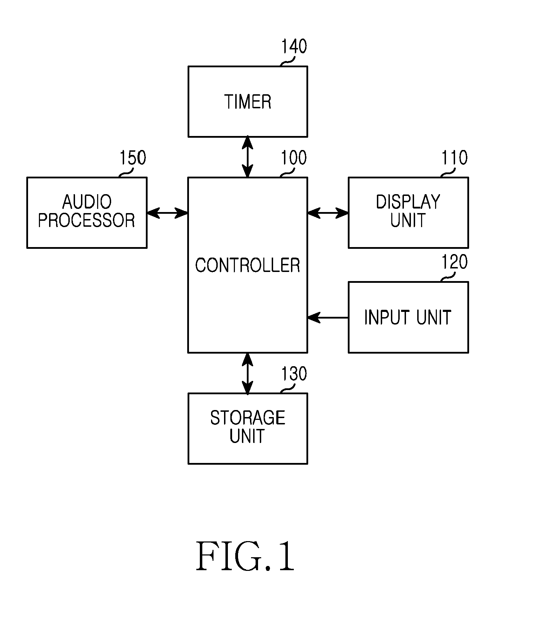

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system. Embodiments of the present disclosure will be described herein below with reference to the accompanying drawings.

Preferred embodiments of the present disclosure will be described herein below with reference to the accompanying drawings. In the following description, well-known functions or constructions are not described in detail since they would obscure the disclosure in unnecessary detail. Also, terms described below, which are defined considering functions in the present disclosure, can be different depending on user and operator's intention or practice. Therefore, the terms should be defined on the basis of the disclosure throughout this specification.

A technology for providing an automatic scroll function in a device with a touch screen according to an embodiment of the present disclosure is described below.

In the following description, the device with the touch screen includes a Personal Digital Assistant (PDA) with a touch screen, a laptop, a smart phone, a net-book, a Mobile Internet Device (MID), a Ultra Mobile Personal Computer (UMPC), a tablet personal computer, an electronic book (e-book) device, a mobile communication terminal, and the like.

FIG. 1 illustrates a construction of a device with a touch screen according to the present disclosure.

As illustrated in FIG. 1, the device with the touch screen includes a controller 100, a display unit 110, an input unit 120, a storage unit 130, a timer 140, and an audio processor 150.

The controller 100 performs the control of the whole operation of the device with the touch screen.

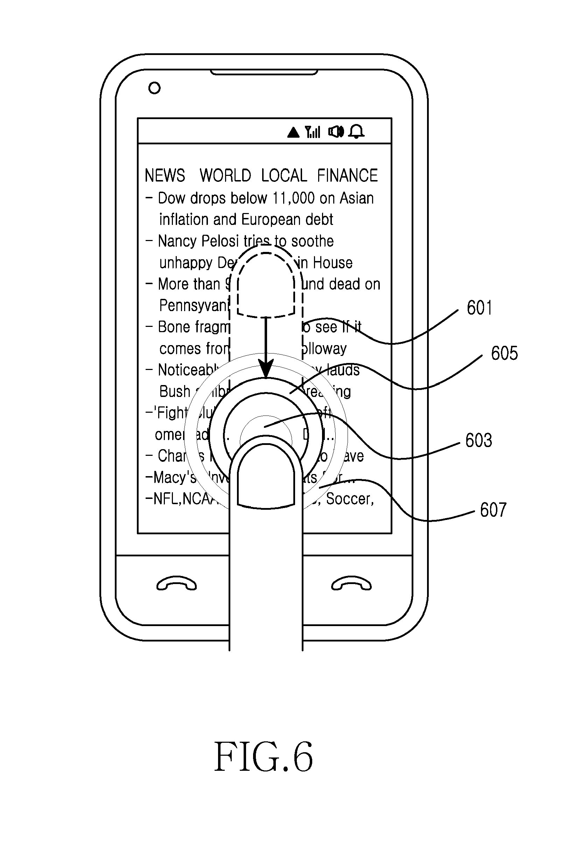

The controller 100 controls an automatic scroll function. For example, when a user scrolls a screen through the display unit 110 as illustrated at 601 in FIG. 6, the controller 100 identifies if a touch input for the user's scroll is held. When the touch input for the user's scroll is held for a predetermined time or longer, the controller 100 drives the automatic scroll. That is, even in the absence of an additional touch input for the user's scroll, the controller 100 automatically scrolls the screen. In an embodiment, the controller 100 scrolls the screen at a preset speed.

When providing an automatic scroll, the controller 100 may control an automatic scroll speed. For example, the controller 100 can control an automatic scroll speed considering a holding time of a touch input for the user's scroll. For another example, when providing an automatic scroll, the controller 100 displays a speed control menu on the display unit 110. After that, the controller 100 may control an automatic scroll speed according to a speed that a user selects through the speed control menu. For further example, the controller 100 may decelerate an automatic scroll speed according to an input of an automatic scroll deceleration control key.

The display unit 110 is composed of a touch screen for performing functions of information display and input means together. The display unit 110 can display state information of the device with the touch screen, character input by a user, moving pictures, still pictures, and the like according to the control of the controller 100. Also, the display unit 110 provides information associated with a user's touch to the controller 100. For example, the display unit 110 provides information associated with the touch input for the user's scroll to the controller 110. Also, the display unit 110 provides holding information of the touch input for the user's scroll, to the controller 110.

The input unit 120 provides input data generated by user's selection to the controller 100. For example, the input unit 120 includes a control button for control of the device with the touch screen. For another example, the input unit 120 may be composed of a keypad for receiving input data from a user independent of the display unit 110.

The storage unit 130 can be composed of a program storage unit configured to store a program for controlling an operation of the device with the touch screen and a data storage unit configured to store data generated during program execution. For example, the storage unit 130 stores constant time information for recognizing an automatic scroll. For another example, when the controller 100 controls an automatic scroll speed in consideration of the holding time of the touch input for the user's scroll, the storage unit 130 stores reference time information for changing the automatic scroll speed.

The audio processor 150 controls input and output of an audio signal.

The portable terminal further includes the timer 140 to confirm the holding time of the touch input for the user's scroll. If a touch input for scroll is sensed, the timer 140 is driven according to the control of the controller 100. Also, the timer 140 may be reset whenever the automatic scroll speed is updated according to an automatic scroll speed control scheme.

Although not illustrated, when the device with the touch screen includes a communication function, the device with the touch screen further includes a communication unit for processing a transmitted/received signal.

A method for providing an automatic scroll function in a device with a touch screen is described below.

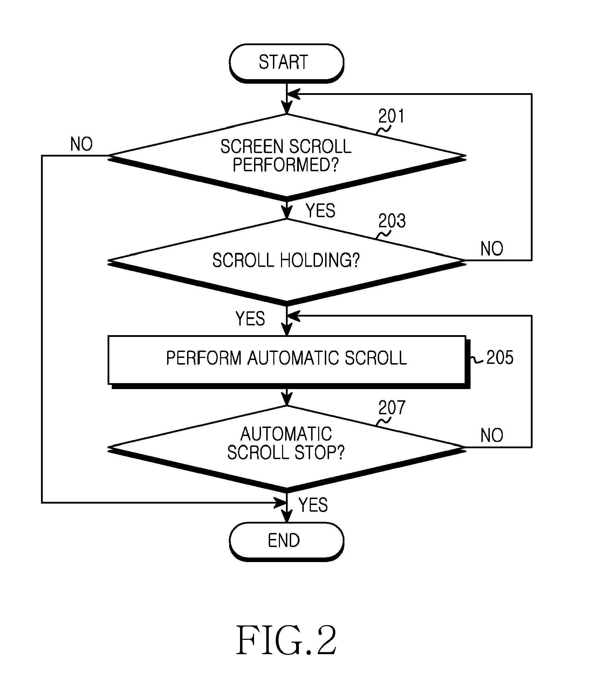

FIG. 2 illustrates a procedure of providing an automatic scroll function in a device with a touch screen according to an embodiment of the present disclosure.

Referring to FIG. 2, in step 201, the device with the touch screen identifies if screen scroll is performed. For example, when a user scrolls a screen, the user drags on the display unit 110 as illustrated at 601 in FIG. 6. Accordingly, in step 201, the device with the touch screen identifies if a user's touch information for screen scroll is input through the display unit 110.

When it is identified in step 201 that the user's touch information for the screen scroll is not input, the device with the touch screen recognizes that it does not perform the screen scroll. Accordingly, the device with the touch screen terminates an algorithm according to the embodiment of the present disclosure.

Alternatively, when it is identified in step 201 that the user's touch information for the screen scroll is input, the device with the touch screen recognizes that it performs the screen scroll. Accordingly, the device with the touch screen scrolls the screen to correspond to the touch input. Then, the device with the touch screen proceeds to step 203 and identifies if the touch input for the user's scroll is held.

When it is identified in step 203 that the touch input for the user's scroll is not held, the device with the touch screen recognizes that it does not perform an automatic scroll. Accordingly, in order to identify if the user continuously scrolls the screen, the device with the touch screen returns to step 201 and again identifies if the screen scroll is performed.

Alternatively, when it is identified in step 203 that the touch input for the user's scroll is held for a predetermined time or longer, the device with the touch screen proceeds to step 205 and performs an automatic scroll function. That is, the device with the touch screen automatically scrolls the screen despite the absence of the user's touch input. In an embodiment, the device with the touch screen scrolls the screen at a preset speed.

After that, the device with the touch screen proceeds to step 207 and identifies if an automatic scroll stop event occurs. For example, when a user touches on display unit 110 during the automatic scroll, the device with the touch screen recognizes that the automatic scroll stop event occurs. For another example, the device with the touch screen identifies if an automatic scroll stop key is input during the automatic scroll.

When it is identified in step 207 that the automatic scroll stop event does not occur, the device with the touch screen returns to step 205 and continuously performs the automatic scroll function.

Alternatively, when it is identified in step 207 that the automatic scroll stop event occurs, the device with the touch screen stops the automatic scroll. Accordingly, the device with the touch screen terminates an algorithm according to the embodiment of the present disclosure.

As described above, the device with the touch screen provides an automatic scroll function depending on holding or non-holding of a touch input for scroll.

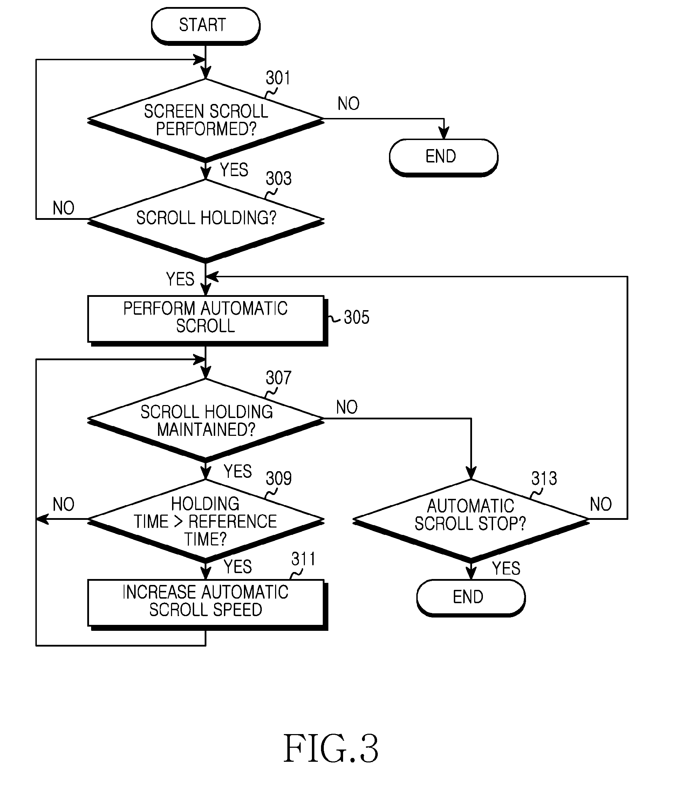

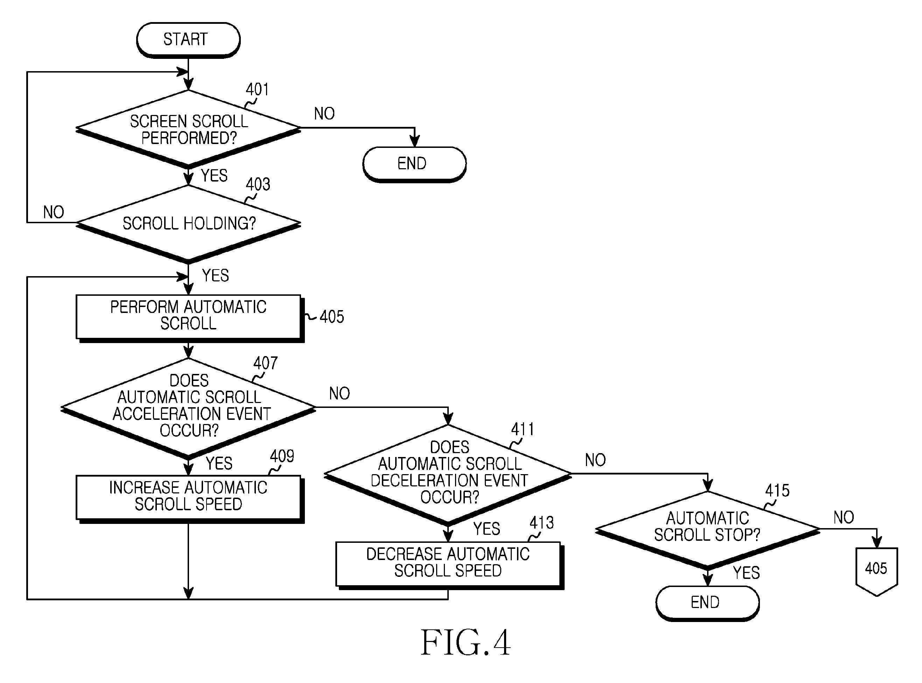

The device with the touch screen may control an automatic scroll speed as illustrated in FIG. 3 or FIG. 4 below.

FIG. 3 illustrates a procedure of providing an automatic scroll function in a device with a touch screen according to another embodiment of the present disclosure.

Referring to FIG. 3, in step 301, the device with the touch screen identifies if a screen scroll is performed. For example, when a user scrolls a screen, the user drags on the display unit 110 as illustrated at 601 in FIG. 6. Accordingly, in step 301, the device with the touch screen identifies if the user's touch information for screen scroll is input through the display unit 110.

When it is identified in step 301 that the user's touch information for the screen scroll is not input, the device with the touch screen recognizes that it does not perform the screen scroll. In this situation, the device with the touch screen terminates an algorithm according to the embodiment of the present disclosure.

Alternatively, when it is identified in step 301 that the user's touch information for the screen scroll is input, the device with the touch screen recognizes that it performs the screen scroll. Accordingly, the device with the touch screen scrolls the screen to correspond to the touch input. Then, the device with the touch screen proceeds to step 303 and identifies if the touch input for the user's scroll is held.

When it is identified in step 303 that the touch input for the user's scroll is not held, the device with the touch screen recognizes that it does not perform an automatic scroll. Accordingly, in order to identify if the user continuously scrolls the screen, the device with the touch screen returns to step 301 and again identifies if the screen scroll is performed.

Alternatively, when it is identified in step 303 that the touch input for the user's scroll is held for a predetermined time or longer, the device with the touch screen proceeds to step 305 and performs an automatic scroll function. That is, the device with the touch screen automatically scrolls the screen despite the absence of the user's touch input. In an embodiment, the device with the touch screen scrolls the screen at a preset basic speed.

After that, the device with the touch screen proceeds to step 307 and identifies if the holding of the touch input for the scroll is continuously maintained.

When it is identified in step 307 that the holding of the touch input for the scroll is maintained, the device with the touch screen proceeds to step 309 and compares a holding time of a touch input for scroll and a reference time. Here, the reference time may be set to the same value irrespective of a current automatic scroll speed or be set to a different value according to an automatic scroll speed. For example, when the reference time is different according to the current automatic scroll speed, the device with the touch screen changes the reference time whenever a change of the automatic scroll speed is made.

When it is identified in step 309 that the holding time of the touch input for the scroll is less than or equal to the reference time, the device with the touch screen returns to step 307 and identifies if the holding of the touch input for the scroll is maintained.

Alternatively, when it is identified in step 309 that the holding time of the touch input for the scroll is greater than the reference time, the device with the touch screen proceeds to step 311 and increases the automatic scroll speed. For example, the device with the touch screen increases the automatic scroll speed by a preset level.

After that, the device with the touch screen proceeds to step 307 and identifies if the holding of the touch input for the scroll is continuously maintained.

When it is identified in step 307 that the holding of the touch input for the scroll is not maintained, the device with the touch screen proceeds to step 313 and identifies if an automatic scroll stop event occurs. For example, when a user touches on the display unit 110 during the automatic scroll, the device with the touch screen recognizes that the automatic scroll stop event occurs. For another example, the device with the touch screen identifies if an automatic scroll stop key is input during the automatic scroll.

When it is identified in step 313 that the automatic scroll stop event does not occur, the device with the touch screen returns to step 305 and continuously performs the automatic scroll function. When the automatic scroll speed is changed in step 311, the device with the touch screen performs an automatic scroll at the changed speed. Alternatively, when the automatic scroll speed is not changed in step 311, the device with the touch screen automatically scrolls the screen at a preset basic speed.

Alternatively, when it is identified in step 313 that the automatic scroll stop event occurs, the device with the touch screen stops the automatic scroll. Accordingly, the device with the touch screen terminates an algorithm according to the embodiment of the present disclosure.

As described above, a device with a touch screen controls an automatic scroll speed considering a holding time of a touch input for scroll. For example, when the automatic scroll speed is set to a maximum speed, although holding of the touch input for the scroll is maintained, the device with the touch screen maintains the automatic scroll speed at the maximum speed. For another example, when the holding time of the touch input for the scroll exceeds the reference time in a state where the automatic scroll speed is set to the maximum speed, the device with the touch screen may change the automatic scroll speed into a preset basic speed. For another example, when the holding time of the touch input for the scroll exceeds the reference time in a state where the automatic scroll speed is set to the maximum speed, the device with the touch screen may decrease the automatic scroll speed in a preset unit.

Also, when controlling an automatic scroll speed as above, the device with the touch screen displays the automatic scroll speed on the display unit 110. For example, as illustrated in FIG. 6, the device with the touch screen displays (605, 607) an automatic scroll speed in an oval form centering a point where a touch input is held. The portable terminal can display the automatic scroll speed in a bar form, a point form and the like as well as the oval form.

In the aforementioned embodiment, a device with a touch screen controls an automatic scroll speed considering a holding time of a touch input for scroll.

In another embodiment, when the device with the touch screen performs automatic scroll, the device with the touch screen may display a separate automatic scroll speed control menu on the display unit 110 to control an automatic scroll speed.

FIG. 4 illustrates a procedure of providing an automatic scroll function in a device with a touch screen according to a further embodiment of the present disclosure.

Referring to FIG. 4, in step 401, the device with the touch screen identifies if a screen scroll is performed. For example, when a user scrolls a screen, the user drags on the display unit 110 as illustrated at 601 in FIG. 6. Accordingly, in step 401, the device with the touch screen identifies if the user's touch information for the screen scroll is input through the display unit 110.

When it is identified in step 401 that the user's touch information for the screen scroll is not input, the device with the touch screen recognizes that it does not perform the screen scroll. Accordingly, the device with the touch screen terminates an algorithm according to the embodiment of the present disclosure.

Alternatively, when it is identified in step 401 that the user's touch information for the screen scroll is input, the device with the touch screen recognizes that it performs the screen scroll. Accordingly, the device with the touch screen scrolls the screen to correspond to the touch input. Then, the device with the touch screen proceeds to step 403 and identifies if the touch input for the user's scroll is held.

When it is identified in step 403 that the touch input for the user's scroll is not held, the device with the touch screen recognizes that it does not perform automatic scroll. Accordingly, in order to identify if the user continuously scrolls the screen, the device with the touch screen returns to step 401 and again identifies if the screen scroll is performed.

Alternatively, when it is identified in step 403 that the touch input for the user's scroll is held during a constant time or more, the device with the touch screen proceeds to step 405 and performs an automatic scroll function. That is, the device with the touch screen automatically scrolls the screen despite the absence of the user's touch input. In an embodiment, the device with the touch screen scrolls the screen at a preset basic speed.

After that, the device with the touch screen proceeds to step 407 and identifies if an automatic scroll acceleration event occurs. For example, the device with the touch screen compares a holding time of a touch input for the scroll and a reference time and identifies if an automatic scroll acceleration event occurs. In this situation, when the holding time of the touch input for the scroll is greater than the reference time, the device with the touch screen recognizes that the automatic scroll acceleration event occurs. For another example, the device with the touch screen identifies if an acceleration menu is selected in an automatic scroll speed control menu.

When it is identified in step 407 that the automatic scroll acceleration event occurs, the device with the touch screen proceeds to step 409 and increases an automatic scroll speed. For example, the device with the touch screen increases an automatic scroll speed by a preset level.

After that, the device with the touch screen returns to step 405 and performs the automatic scroll function. That is, the device with the touch screen automatically scrolls the screen at the changed speed of step 409 despite the absence of a user's touch input.

Alternatively, when it is identified in step 407 that the automatic scroll acceleration event does not occur, the device with the touch screen proceeds to step 411 and identifies if an automatic scroll deceleration event occurs. For example, the device with the touch screen identifies if a deceleration menu is selected in an automatic scroll speed control menu. For another example, the device with the touch screen identifies if an automatic scroll deceleration control key is input.

When it is identified in step 411 that the automatic scroll deceleration event occurs, the device with the touch screen proceeds to step 413 and decreases the automatic scroll speed. For example, the device with the touch screen decreases an automatic scroll speed by a preset level. For another example, the device with the touch screen may change an automatic scroll speed into a preset basic speed.

After that, the device with the touch screen returns to step 405 and performs the automatic scroll function. That is, the device with the touch screen automatically scrolls the screen at the changed speed of step 413 despite the absence of a user's touch input.

Alternatively, when it is identified in step 411 that the automatic scroll deceleration event does not occur, the device with the touch screen proceeds to step 415 and identifies if an automatic scroll stop event occurs. For example, when a user touches on display unit 110 during the automatic scroll, the device with the touch screen recognizes that the automatic scroll stop event occurs. For another example, the device with the touch screen identifies if an automatic scroll stop key is input during the automatic scroll.

Alternatively, when it is identified in step 415 that the automatic scroll stop event does not occur, the device with the touch screen returns to step 405 and performs the automatic scroll function. When an automatic scroll speed is changed in step 409 or step 413, the device with the touch screen performs the automatic scroll at the changed speed.

Alternatively, when it is identified in step 415 that the automatic scroll stop event occurs, the device with the touch screen stops the automatic scroll. Accordingly, the device with the touch screen terminates an algorithm according to the embodiment of the present disclosure.

In the aforementioned embodiment, when a touch input for scroll is held, a device with a touch screen initiates automatic scroll. After that, the device with the touch screen determines whether to control an automatic scroll speed.

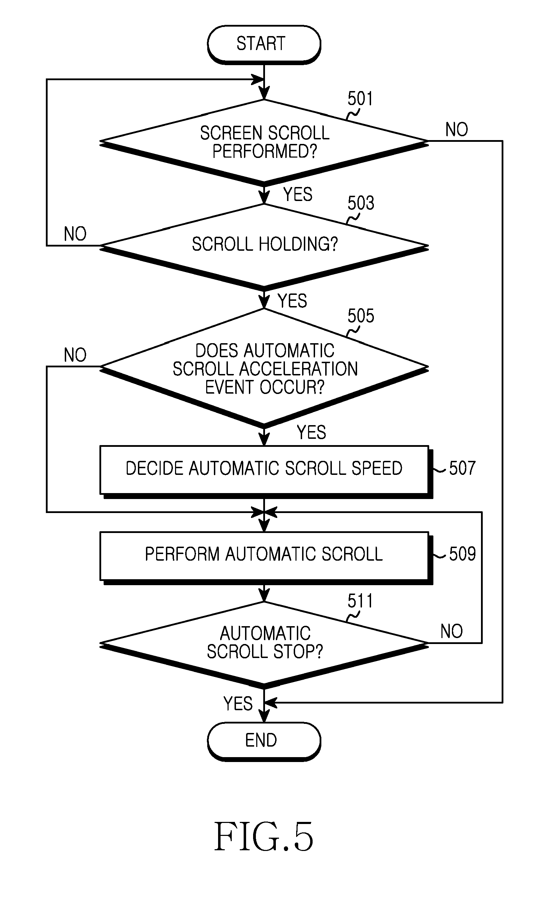

In another embodiment, when a touch input for scroll is held, a device with a touch screen may determine whether to control an automatic scroll speed as illustrated in FIG. 5 below. After that, the device with the touch screen performs automatic scroll at the determined speed.

FIG. 5 illustrates a procedure of providing an automatic scroll function in a device with a touch screen according to a yet another embodiment of the present disclosure.

Referring to FIG. 5, in step 501, the device with the touch screen identifies if a screen scroll is performed. For example, when a user scrolls a screen, the user drags on the display unit 110 as illustrated at 601 in FIG. 6. Accordingly, in step 501, the device with the touch screen identifies if the user's touch information for the screen scroll is input through the display unit 110.

When it is identified in step 501 that the user's touch information for the screen scroll is not input, the device with the touch screen recognizes that it does not perform the screen scroll. Accordingly, the device with the touch screen terminates an algorithm according to the embodiment of the present disclosure.

Alternatively, when it is identified in step 501 that the user's touch information for the screen scroll is input, the device with the touch screen recognizes that it performs the screen scroll. Accordingly, the device with the touch screen scrolls the screen to correspond to the touch input. Then, the device with the touch screen proceeds to step 503 and identifies if the touch input for the user's scroll is held.

When it is identified in step 503 that the touch input for the user's scroll is not held, the device with the touch screen recognizes that it does not perform automatic scroll. Accordingly, in order to identify if the user continuously scrolls the screen, the device with the touch screen returns to step 501 and again identifies if the screen scroll is performed.

Alternatively, when it is identified in step 503 that the touch input for the user's scroll is held for a predetermined time or longer, the device with the touch screen proceeds to step 505 and identifies if an automatic scroll acceleration event occurs. For example, the device with the touch screen compares a holding time of a touch input for scroll and a reference time and identifies if an automatic scroll acceleration event occurs. In this situation, when the touch input for screen scroll is continuously maintained during the reference time or longer, the device with the touch screen recognizes that the automatic scroll acceleration event occurs. For another example, the device with the touch screen identifies if an acceleration menu is selected in an automatic scroll speed control menu.

When it is identified in step 505 that the automatic scroll acceleration event does not occur, the device with the touch screen jumps to step 509 and performs an automatic scroll function. That is, the device with the touch screen automatically scrolls a screen despite the absence of a user's touch input. In an embodiment, the device with the touch screen scrolls the screen at a preset basic speed.

Alternatively, when it is identified in step 505 that the automatic scroll acceleration event occurs, the device with the touch screen proceeds to step 507 and determines an automatic scroll speed. For example, the device with the touch screen determines an automatic scroll speed considering the holding time of the touch input for the scroll. For another example, the device with the touch device may determine an automatic scroll speed according to a speed that a user selects through a speed control menu.

After determining the automatic scroll speed, the device with the touch screen proceeds to step 509 and performs an automatic scroll function. In an embodiment, the device with the touch screen scrolls a screen at the automatic scroll speed determined in step 507 despite the absence of a user's touch input.

After that, the device with the touch screen proceeds to step 511 and identifies if an automatic scroll stop event occurs. For example, when a user touches on the display unit 110 during the automatic scroll, the device with the touch screen recognizes that an automatic scroll stop event occurs. For another example, the device with the touch screen identifies if an automatic scroll stop key is input during the automatic scroll.

When it is identified in step 511 that the automatic scroll stop event does not occur, the device with the touch screen returns to step 509 and performs the automatic scroll function. When an automatic scroll speed is changed in step 507, the device with the touch screen performs automatic scroll at the changed speed.

Alternatively, when it is identified in step 511 that the automatic scroll stop event occurs, the device with the touch screen stops the automatic scroll. Accordingly, the device with the touch screen terminates an algorithm according to the embodiment of the present disclosure.

In the aforementioned embodiment, when a device with a touch screen recognizes that it does not perform an automatic scroll, in order to identify if a user continuously scrolls a screen, the device with the touch screen again identifies if a screen scroll is performed.

In another embodiment, when a device with a touch screen recognizes that it does not perform an automatic scroll, the device with the touch screen may terminate an algorithm for automatic scroll.

In the aforementioned embodiment, a device with a touch screen scrolls a screen to correspond to a user's touch input. The device with the touch screen can scroll the screen in any one direction of up/down/left/right according to direction information included in the touch input. For example, when a user attempts to scroll down as illustrated in FIG. 6, the device with the touch screen scrolls the screen down. In an embodiment, when performing an automatic scroll because a user's touch input is held, the device with the touch screen continuously scrolls the screen down despite the absence of a user's touch input.

As described above, exemplary embodiments of the present disclosure have an advantage that, by providing an automatic scroll function according to holding or non-holding of a touch input for scroll, a user can automatically scroll a screen with a minimum operation in a device with a touch screen.

Also, the exemplary embodiments of the present disclosure have an advantage that, by controlling an automatic scroll speed, the user can scroll the screen more conveniently in the device with the touch screen.

It will be appreciated that embodiments of the present invention according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the disclosure has been shown and described with reference to certain preferred embodiments thereof, it will be understood by those skilled in the art that various changes in form and details may be made therein without departing from the spirit and scope of the disclosure as defined by the appended claims.

## Claims

1. A method for scrolling a screen in a device with a touch screen, the method comprising:
when a touch input through the touch screen is confirmed, scrolling a screen image of the touch screen in the direction of the touch input; and
when the touch input is held, continuously scrolling the screen image of the touch screen in the direction of the touch input.

2. The method of claim 1, further comprising, when a scroll speed change event occurs, changing a speed of continuously scrolling the screen image of the touch screen.

3. The method of claim 2, wherein changing the speed comprises:
displaying a scroll speed control menu; and
changing the speed of continuously scrolling the screen image of the touch screen according to a speed that a user selects in a scroll speed control menu.

4. The method of claim 2 or 3, further comprising, when the speed of continuously scrolling the screen image of the touch screen is changed, displaying information of the changed speed on a display unit (110).

5. An apparatus for scrolling a screen in a device with a touch screen, the apparatus comprising:
a touch screen configured to detect a user's touch; and
a controller (100) configured to scroll a screen image of the touch screen in the direction of a touch input through the touch input of the touch screen and, when the touch input is held, continuously scroll the screen image of the touch screen in the direction of the touch input.

6. The method of any of claims 1-4 or the apparatus of claim 5, wherein continuously scrolling comprises:
identifying if the touch input is held for a predetermined time or longer; and
when the touch input is held for the predetermined time or longer, continuously scrolling the screen image of the touch screen in the direction of the touch input according to a reference speed.

7. The method of any of claims 1-4 or the apparatus of claim 5, wherein continuously scrolling comprises:
identifying if the touch input is held for a predetermined time or longer;
when the touch input is held for the predetermined time or longer, determining a scroll speed; and
continuously scrolling the screen image of the touch screen in the direction of the touch input according to the determined scroll speed.

8. The apparatus of claim 5, 6 or 7 wherein, when a scroll speed change event occurs, the controller (100) changes a speed of continuously scrolling the screen image of the touch screen.

9. The method of claim 2 or the apparatus of claim 8, wherein changing the speed comprises:
determining a change speed considering a holding time of the touch input; and
changing the speed of continuously scrolling the screen image of the touch screen into the change speed.

10. The method of claim 2 or the apparatus of claim 8, wherein changing the speed comprises, when the scroll speed change event occurs considering a holding time of the touch input, increasing the speed of continuously scrolling the screen image of the touch screen.

11. The method of claim 10 or the apparatus of claim 10, further comprising, when the speed of continuously scrolling the screen image of the touch screen changes to a maximum speed, maintaining the speed of continuously scrolling the screen image of the touch screen, at the maximum speed.

12. The method of claim 10 or 11 or the apparatus of claim 10 or 11, further comprising:
when the speed of continuously scrolling the screen image of the touch screen changes to a maximum speed, identifying if the scroll speed change event occurs considering the holding time of the touch input; and
when the scroll speed change event occurs, changing the speed of continuously scrolling the screen image of the touch screen into a basic speed.

13. The apparatus of any of claims 5-12, wherein, in a case of continuously scrolling the screen image of the touch screen in the direction of the touch input, the controller (100) controls to display a scroll speed control menu, and change the speed of continuously scrolling the screen image of the touch screen according to a speed that a user selects in a scroll speed control menu.

14. The apparatus of any of claims 3-13, wherein, when the speed of continuously scrolling the screen image of the touch screen is changed, the controller (100) controls to display information of the changed speed on the touch screen.
